# EUROPÄISCHE PATENTANMELDUNG

(11) **EP 1 726 818 A2**
(43) Veröffentlichungstag der Anmeldung: **29.11.2006**
(21) Anmeldenummer: 06114330.1
(22) Anmeldetag: 22.05.2006
(51) Int. Cl.: F02M 37/22

(54) **Kraftstofffiltersystem, insbesondere für Kraftfahrzeuge und Verfahren zu dessen Betrieb**

(30) Priorität: 24.05.2005 DE 102005024481
(71) Anmelder: MANN+HUMMEL GmbH, 71638 Ludwigsburg (DE)
(72) Erfinder: Micke, Michael, 70378, Stuttgart (DE); Fasold, Michael, 71549, Auenwald (DE); Linhart, Jochen, 71332, Waiblingen (DE)

(57) **Zusammenfassung**

Die Erfindung betrifft einen Kraftstofffilter, insbesondere für Kraftfahrzeuge, zur Reinigung des Kraftstoffes. Der Kraftstofffilter weist ein Filtergehäuse (10) mit einem Einlass (14) und einem Auslass (15) auf. Zwischen dem Einlass (14) und dem Auslass (15) ist ein Filterelement (16) zur Reinigung von Kraftstoff angeordnet. Weiterhin ist in dem Filtergehäuse (10) ein Sammelraum (20) vorgesehen, in welchem sich das aus dem Kraftstoff abgeschiedene Wasser sammelt. In dem Filtergehäuse ist eine Wasseraustragsvorrichtung (23) angeordnet, welche über ein Gehäuse (24) verfügt. Das Gehäuse (24) verfügt über einen Eintritt (33) und einen Austritt (28), wobei in dem Gehäuse (24) eine für Wassermoleküle durchlässige Membran (25) angeordnet ist, welche den Eintritt (33) von dem Austritt (28) trennt. Die Membran (25) verfügt über Kanalstrukturen (26), welche einerseits dichtend verschlossen sind.

## Beschreibung

### Technisches Gebiet

Die Erfindung betrifft ein Kraftstofffiltersystem nach dem Oberbegriff des Anspruchs 1 sowie ein Verfahren zum Betrieb des Kraftstofffiltersystems nach Anspruch 9.

### Stand der Technik

Das Dokument DE 101 38 695 offenbart eine Vorrichtung zum Austrag von Wasser aus einem Kraftstoffsystem. Das Kraftstoffsystem verfügt über ein Filterelement, an welchem Wasser abgeschieden wird. Das abgeschiedene Wasser sammelt sich in einem Sammelraum. Unter dem Sammelraum ist ein Auffangraum angeordnet, wobei zwischen dem Sammelraum und dem Auffangraum eine Membran angeordnet ist. Die Membran ist derart ausgestaltet, dass nur Reinstwasser hindurch treten kann. Für Kraftstoffmoleküle ist die Membran undurchlässig. In dem Sammelraum ist ein Wassersensor angeordnet, welcher mit einem im Auffangraum angeordneten Ventil verbunden ist.

Aufgabe der Erfindung ist die Schaffung eines Kraftstofffiltersystemes, welches über eine kompakte Wasserabscheidungsvorrichtung verfügt. Diese Aufgabe wird durch die Merkmale des Patentanspruches 1 gelöst.

### Offenbarung der Erfindung

Der erfindungsgemäße Kraftstofffilter dient der Reinigung von Kraftstoff, insbesondere von Dieselkraftstoff, bei Kraftfahrzeugen oder Arbeitsmaschinen. Der Kraftstofffilter weist ein Filtergehäuse mit einem Einlass für ungereinigten Kraftstoff und einem Auslass für gereinigten Kraftstoff auf. In dem Filtergehäuse ist ein Filterelement angeordnet, welches den Einlass dichtend von dem Auslass trennt. Weiterhin wird an dem Filterelement im Kraftstoff enthaltenes Wasser abgeschieden. Da das abgeschiedene Wasser schwerer ist als der Kraftstoff, sinkt das Wasser in den unteren Bereich des Kraftstofffilters ab und sammelt sich in einem Sammelraum. Im Bereich des Sammelraums ist eine Wasseraustragsvorrichtung angeordnet, welche über ein Gehäuse verfügt. Das Gehäuse weist einen Eintritt und einen Austritt auf. In dem Gehäuse ist eine für Wassermoleküle durchlässige Membran angeordnet, welche den Eintritt von dem Austritt trennt. Die Membran, welche z. B. aus einem Polymer besteht, verfügt über Kanalstrukturen, welche einerseits dichtend verschlossen sind. Der Verschluss ist aus einem wasser- und kraftstoffbeständigen Material erzeugt, damit der Verschluss dauerhaft die Kanalstrukturen verschließt. Weiterhin ist der Verschluss zumindest für Kraftstoffanteile undurchlässig. Bei einer vorteilhaften Ausgestaltung besteht der Verschluss aus dem gleichen Material, wie die Membran selbst, wodurch auch die Fläche des Verschlusses als Membranoberfläche genutzt werden kann. Das im Sammelraum enthaltene Wasser ist noch mit Kraftstoffanteilen verunreinigt, wodurch dieses Wasser nicht ungereinigt an die Umwelt abgegeben werden darf. Dieses verunreinigte Wasser tritt durch den Eintritt in das Gehäuse der Wasseraustragsvorrichtung ein und benetzt die Membran. Da die Kanalstrukturen einseitig verschlossen sind, kann das verunreinigte Wasser nicht direkt in die Kanalstrukturen eintreten. Bei einem Druckunterschied zwischen der Außenseite der Membran und der Kanalstruktur treten Wassermoleküle aus dem verunreinigten Wasser durch die Membran hindurch. Die Kraftstoffanteile verbleiben auf der anderen Seite der Membran. Die durch die Membran hindurchgetretenen Wassermoleküle vereinen sich zu Wassertropfen, welche direkt aus der Wasseraustragsvorrichtung in die Umwelt abgegeben werden können. Hierzu fließen die Wassertropfen durch das offene Ende der Kanalstrukturen ab. Durch die Verwendung einer Membran mit Kanalstrukturen kann auf relativ wenig Bauraum eine relativ große Membranoberfläche erzeugt werden. Hierbei kann die Membran als Flach- oder Rundmembran ausgestaltet sein, welche über integrierte Kanäle verfügt. Es ist jedoch auch möglich, einzelne Hohlfasern zu verwenden, welche zu einem Bündel zusammengepackt werden. Der Druckunterschied zwischen der Außenseite der Membran und der Kanalstruktur kann durch den, im Filtergehäuse herrschenden Druck, welcher durch eine Kraftstoffpumpe eingeleitet wird, erzeugt werden. Der Druck in der Kanalstruktur kann dann z. B. der Umgebungsdruck sein.

Gemäß einer vorteilhaften Ausgestaltung besteht die Membran aus einem anorganischen Material, insbesondere Keramik. Dieses Material ist auch bei wechselhaften Temperaturen beständig. Sowohl sehr hohe als auch sehr niedrige Temperaturen zerstören dieses Material nicht, wodurch die Funktion der Wasseraustragsvorrichtung dauerhaft gewährleistet ist.

Gemäß einer vorteilhaften Ausführung der Erfindung ist ein Ventil zwischen dem Eintritt und dem Austritt angeordnet, wodurch die Durchströmung der Wasseraustragsvorrichtung gezielt erfolgen bzw. verhindert werden kann. Die Anordnung des Ventils zwischen dem Eintritt und der Membran ist besonders vorteilhaft, da das Ventil im geschlossenen Zustand verhindert, dass die Membran in direkten Kontakt mit Kraftstoff gerät und die Membran verstopft. Erst wenn eine ausreichende Menge Wasser verfügbar ist, wird das Ventil geöffnet, wodurch das Wasser zu der Membran strömen kann. Um zu erfassen, ob eine ausreichende Menge Wasser in dem Sammelraum vorhanden ist, ist es vorteilhaft, dass ein Sensor im Sammelraum angeordnet ist, welcher mit dem Ventil korrespondierend verbunden ist. Dieser Sensor kommuniziert mit dem Ventil, wodurch das Ventil bei einer ausreichenden Wassermenge geöffnet bzw. beim Unterschreiten einer Mindestwassermenge geschlossen wird.

In einer hier alternativen Ausgestaltung ist zwischen Sammelraum und Eintritt in die Wasseraustrittsvorrichtung ein Schwimmer angeordnet, wobei der Schwimmer eine derartige spezifische Dichte aufweist, dass er auf der Grenze zwischen Wasser und Kraftstoff schwimmt. Er hat also eine größere spezifische Dichte als der Kraftstoff und eine geringere als das Wasser. Weiterhin weist der Schwimmer einen Magneten auf, welcher mit einem Read-Kontakt korrespondiert. Dadurch kann bei Erreichen einer vorgegebenen Lage des Schwimmers der Read-Kontakt als Schalter zum Antrieb einer Pumpe dienen. Es handelt sich hier also um eine einfache und kostengünstige Variation eines Wasserstandsensors. Weiterhin weist der Schwimmer eine Dichtfläche auf, welche mit einem Dichtsitz korrespondiert, welcher im Durchgang zwischen Sammelraum und Eintritt in die Wasseraustrittsvorrichtung angeordnet ist. Bei Erreichen eines bestimmten vorgegebenen Wasserstandes in der Wasseraustragsvorrichtung schwimmt der Schwimmer soweit auf, dass die Dichtfläche auf den Dichtsitz im Durchgang trifft und dieser dadurch verschlossen wird. Bei Erreichen dieser Position wird dann der Read-Kontakt durch den Magneten auf dem Schwimmer ausgelöst, wodurch dann der Wasseraustrag aus der Wasseraustrittsvorrichtung aktiviert wird. So wird in einem Bauteil eine Kombination aus Wassersensor und Ventil realisiert, welches zu erheblichen Kosteneinsparungen führt und auch die Funktionssicherheit des Filters erhöht.

Bei einer vorteilhaften Ausgestaltung der Erfindung verfügt das Gehäuse über ein Totvolumen, in welchem sich von der Membran abgeschiedene Kraftstoffreste sammeln. Das Totvolumen ist im geodätisch oberen Bereich des Gehäuses angeordnet. Da die von der Membran zurückgehaltenen Kraftstoffreste leichter sind als Wasser, steigen diese Kraftstoffreste - unterstützt durch die im Betrieb ständig vorhandenen Vibrationen - nach oben und sammeln sich. Somit wird keine Membranfläche für die Speicherung der Kraftstoffreste blockiert.

Bei einer Weiterbildung der Erfindung verfügt das Totvolumen über ein Ablassventil, welches mit dem Sammelraum in dem Filtergehäuse kommunizierend verbunden ist. Dieses Ablassventil kann dann geöffnet werden, wenn sich in dem Totvolumen eine größere Menge an Kraftstoffresten angesammelt hat. Durch das Öffnen des Ablassventils entweichen die Kraftstoffreste in den Sammelraum des Filtergehäuses und können der Verbrennung zugeführt werden. Gleichzeitig erhöht sich die Standzeit der Membran, da die Membranoberfläche nicht zugesetzt wird, sondern für das auszutragende Wasser zur Verfügung steht.

Es ist vorteilhaft, dass die Wasseraustragsvorrichtung lösbar mit dem Sammelraum verbunden, insbesondere verschraubt ist. Somit ist ein schneller und einfacher Wechsel der Wasseraustragsvorrichtung realisierbar.

Bei einer weiteren Ausgestaltung der Erfindung ist der Austritt mit einer Pumpe verbunden, wodurch in der Wasseraustragsvorrichtung ein, zum Innendruck des Filtergehäuses unterschiedlicher Druck erzeugbar ist. Die Pumpe kann hierbei eine Unterdruck- bzw. Unterdruckpumpe sein, welche die Wassermoleküle durch die Membran hindurch saugen bzw. drücken. Anstelle einer Pumpe können auch vorhandene Druckspeicher, wie sie z. B. im Kraftfahrzeug vorhanden sind, genutzt werden. Somit kann der für eine Pumpe erforderliche Bauraum und die Kosten eingespart werden.

Es ist vorteilhaft, wenn die Pumpe durch ein Wachsdehnelement mit einem daran angebrachten Kolben gebildet wird. Dieser Kolben ragt in die Wasseraustragsvorrichtung hinein, wobei dann bei einer Bewegung des Kolbens weiter in die Wasseraustragsvorrichtung hinein ein Überdruck in dieser hervorgerufen wird. Durch diesen Überdruck wird das Wasser in die Kanäle im Inneren der Membran hineingedrückt, und durch diese dann durch den gemeinsamen Auslass wieder ausgetragen. Die Auslenkung des Kolbens des Wachsdehnelementes wird durch eine Heizvorrichtung ausgelöst, welche im Betrieb zu einer Volumenausdehnung im Inneren des Wachsdehnelementes führt, wodurch der Kolben dann aus diesem herausgedrückt wird. Bevorzugt wird die Heizvorrichtung durch ein PTC-Element gebildet. Derartige Wachsdehnelemente mit integrierter Heizeinrichtung sind kostengünstig, einfach aufgebaut und nahezu verschleißfrei. Sie weisen eine robuste und langlebige Technik durch den einfachen Aufbau auf und es sind hohe Drücke bis ungefähr acht Bar realisierbar. Dadurch, dass das PTC-Element eine geringe Leistungsaufnahme beinhaltet, ergibt sich weiterhin der Vorteil eines geringen Stromverbrauchs. Nach dem Abschalten der Heizung wird der Kolben bevorzugt über eine Federeinrichtung wieder in seine Ausgangslage zurückversetzt. Beim Zurückziehen des Kolbens in seine Ausgangslage wird durch den dann in der Wasseraustragsvorrichtung entstehenden Unterdruck Luft durch die Membran in die Wasseraustragsvorrichtung gezogen, wobei die durch die Membran permeierende Luft eine an der Membranoberfläche entstehende Deckschicht, bestehend aus Kohlenwasserstoffen, ausgetragen wird. Dadurch kann die Permeationsleistung der Membran deutlich erhöht werden und somit ergibt sich eine hohe Standzeit des Systems.

Das erfindungsgemäße Verfahren zum Betreiben eines oben beschriebenen Kraftstofffilters sieht vor, dass das in dem Sammelraum abgeschiedene, verunreinigte Wasser durch den Eintritt in die Wasseraustragsvorrichtung einströmt. Durch einen Druckunterschied zwischen dem Eintritt und dem Austritt treten Wassermoleküle aus dem mit Kraftstoff verunreinigten Wasser durch die Membran hindurch und können als reines Wasser in die Umwelt abgegeben werden.

Gemäß einer weiteren Ausgestaltung des Verfahrens, wird der Druck zwischen dem Eintritt und dem Austritt durch das Volumen eines in die Wasseraustragsvorrichtung eindringenden Kolbens, welcher mit einem Wachsdehnelement verbunden ist, hervorgerufen. Das Wachsdehnelement wird über eine Heizung aktiviert, und drückt den Kolben in die Wasseraustragsvorrichtung hinein, da dadurch das vom verschmutzten Wasser in der Wasseraustragsvorrichtung eingenommene Volumen verringert wird, entsteht innerhalb der Wasseraustragsvorrichtung ein Überdruck, welcher das Austreten der Wassermolekül hervorruft.

Gemäß einer vorteilhaften Weiterbildung wird die Membran erst nach einer definierten Zeitspanne mit dem verunreinigten Wasser beaufschlagt. Hierzu wird dann ein Ventil geöffnet, welches den Strömungsweg zu der Membran freigibt. Die Zeitspanne kann einerseits eine vorgegebene Zeitspanne ab der Inbetriebnahme des Kraftstofffilters sein. Hierbei ist die Zeitspanne derart gewählt, dass eine ausreichende Menge Wasser in dem Sammelraum enthalten ist, um die Membran nicht mit Kraftstoff zu verstopfen. Weiterhin kann die Zeitspanne auch ein Zeitraum nach dem Abschalten der Brennkraftmaschine sein. Nach dem Abschalten der Brennkraftmaschine wird der Kraftstofffilter nicht mehr durchströmt, wodurch sich das Kraftstoff-Wassergemisch selbst trennt. Durch diesen Trennvorgang wird Wasser mit einer geringeren Kraftstoffkonzentration auf die Membran geleitet, wodurch die Standzeit der Membran erhöht wird.

### Kurze Beschreibung der Zeichnungen

Weitere Einzelheiten der Erfindung werden nachfolgend anhand der Figuren erläutert. Hierbei zeigt

Figur 1 einen Kraftstofffilter im Schnitt,

Figur 2 eine Wasseraustragsvorrichtung ohne Gehäuse,

Figur 3 einen Ausschnitt aus einer Wasseraustragsvorrichtung im Schnitt,

Figur 4 eine weitere Ausgestaltung des Kraftstofffilters,

Figur 5 eine Wasseraustragsvorrichtung der weiteren Ausgestaltung mit Gehäuseunterteil und

Figur 6 einen Schwimmerschalter im Schnitt.

### Ausführungsform(en) der Erfindung

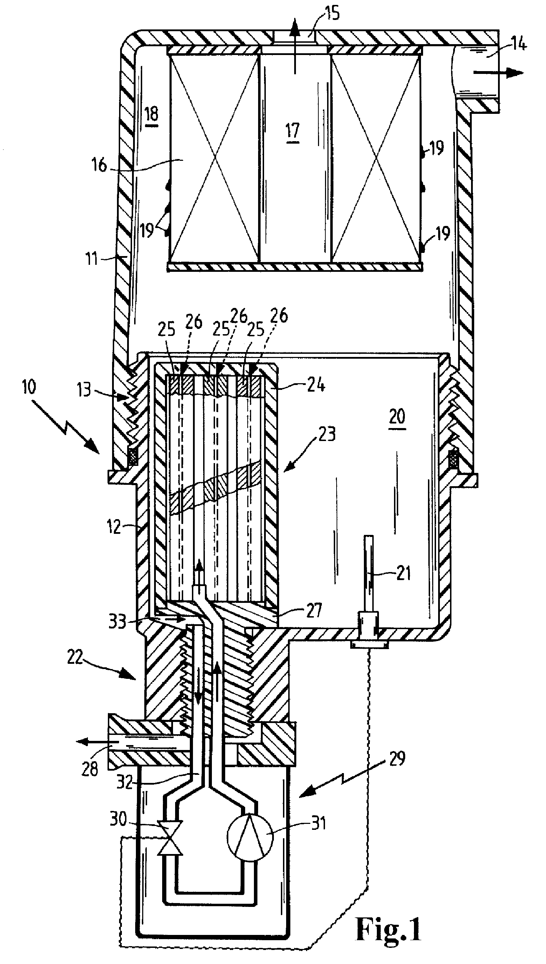

In Figur 1 ist ein Kraftstofffilter im Schnitt dargestellt. Der Kraftstofffilter verfügt über ein Filtergehäuse 10, welches über ein Oberteil 11 und ein Unterteil 12 verfügt. Das Oberteil 11 ist über eine Schraubverbindung 13 mit dem Unterteil 12 dichtend verbunden. Weiterhin verfügt das Oberteil 11 über einen Einlass 14 und einen Auslass 15. Zwischen dem Einlass 14 und dem Auslass 15 ist ein Filterelement 16 angeordnet. Das Filterelement 16 umschließt eine Reinseite 17, welche dichtend von einer mit dem Einlass 14 verbundenen Rohseite 18 getrennt ist. An dem Filterelement 16 scheiden sich Wassertröpfchen 19 ab, welche in einen Sammelraum 20 absinken. Der Sammelraum 20 ist in dem Unterteil 12 des Filtergehäuses 10 angeordnet. Weiterhin ist in dem Unterteil 12 ein Wassersensor 21 angeordnet, welcher in den Sammelraum 20 hineinragt und den Pegelstand des Wassers erfasst. Das Unterteil 12 verfügt außerdem über einen Anschluss 22, an welchem eine Wasseraustragsvorrichtung 23 angeschraubt ist. Die Wasseraustragsvorrichtung 23 verfügt über ein zweiteiliges Gehäuse 24, in welches flache Membranen 25 dichtend eingeklebt sind. Hierbei bestehen die Membranen 25 aus einem porösen, für Wassermodule durchlässigen Material. Vorzugsweise kann die Membran 25 aus Keramik bestehen, wobei die Porosität derart gewählt wird, dass nur Wassermoleküle durch die Membran 25 hindurchtreten können. Die Membranen 25 verfügen in ihrem Inneren über Kanalstrukturen 26 (gestrichelt dargestellt), welche an ihrem oberen Ende durch das Gehäuse 24 verschlossen sind. Mit ihrem unteren Ende sind die Membranen 25 mit einem Sockel 27 verbunden. In dem Sockel 27 sind Rillen (nicht dargestellt) angeordnet, auf welchen die Membranen 25 derart angeordnet sind, dass die Kanalstrukturen 26 in diese Rillen münden. Über die Rillen in dem Sockel 27 kommunizieren die Kanalstrukturen 26 mit ihrem unteren Ende mit einem Austritt 28. Die Kanalstrukturen 26 können z. B. über eine kreisförmige Querschnittsfläche verfügen, wobei selbstverständlich auch andere Querschnittsflächen, wie rechteckig oder oval, realisiert werden können. An den Sockel 27 schließt eine Steuerungseinheit 29 an, in welcher ein Ventil 30 und eine Pumpe 31 angeordnet ist. Das Ventil ist über einen Strömungskanal 32 mit einem in dem Sockel 27 angeordneten Eintritt 33 verbunden. Der Strömungskanal 32 ist vor dem Ventil 30 zumindest teilweise vertikal ausgerichtet, wodurch sich das Wasser in diesem Bereich sammelt. Durch eine längere Verweilzeit des Wassers in dem Strömungskanal 32 schwimmen Kraftstoffanteile auf und treten aus dem Strömungskanal 32 aus, wodurch sich relativ reines Wasser in dem Strömungskanal 32 befindet.

Der zu reinigende Kraftstoff tritt durch den Einlass 14 in Pfeilrichtung in das Filtergehäuse 10 ein. Der Kraftstoff durchströmt das Filterelement 16 und tritt durch den Auslass 15 aus dem Filtergehäuse 10 aus. Die im Kraftstoff enthaltenen Verunreinigungen werden von dem Filterelement 16 abgeschieden. Das im Kraftstoff enthaltene Wasser wird als Tröpfchen 19 an dem Filterelement 16 ebenfalls abgeschieden. Da Wasser eine höhere Dichte aufweist als Kraftstoff, sinken die Tröpfchen 19 in den Sammelraum 20 und verdrängen nach und nach den Kraftstoff aus diesem Bereich. Das gesammelte Wasser dringt auch in den Strömungskanal 32 ein und verdrängt auch dort den Kraftstoff. Nachdem sich eine größere Menge Wasser angesammelt hat, erfasst dies der Sensor 21, und er sendet ein Signal an das Ventil 30. Das Ventil 30 öffnet sich und die Pumpe 31 beginnt, das Wasser gegen den im Filtergehäuse 10 herrschenden Druck in die Wasseraustragsvorrichtung 23 zu fördern. Diese Ausführung ist bei einem im Saugbetrieb betriebenen Kraftstofffilter einzusetzen. Wird der Kraftstofffilter im Druckbetrieb betrieben, so kann auch die Pumpe 31 entfallen.

Das Wasser befindet sich innerhalb des Gehäuses 24. Durch den in dem Gehäuse 24 herrschenden Druck werden die Wassermoleküle durch die Membran 25 hindurchgedrückt und sammeln sich als reines Wasser in den Kanalstrukturen 26. Das Wasser fließt dann in den Kanalstrukturen 26 ab und gelangt durch die Rillen in dem Sockel 27 zu dem Austritt 28, wo das Wasser bedenkenlos in die Umwelt abgegeben werden kann. Sobald der Wasserpegel in dem Sammelraum 20 unter einen definierten Wert sinkt, sendet der Sensor 21 ein entsprechendes Signal an das Ventil 30, wodurch der Strömungskanal 32 verschlossen wird.

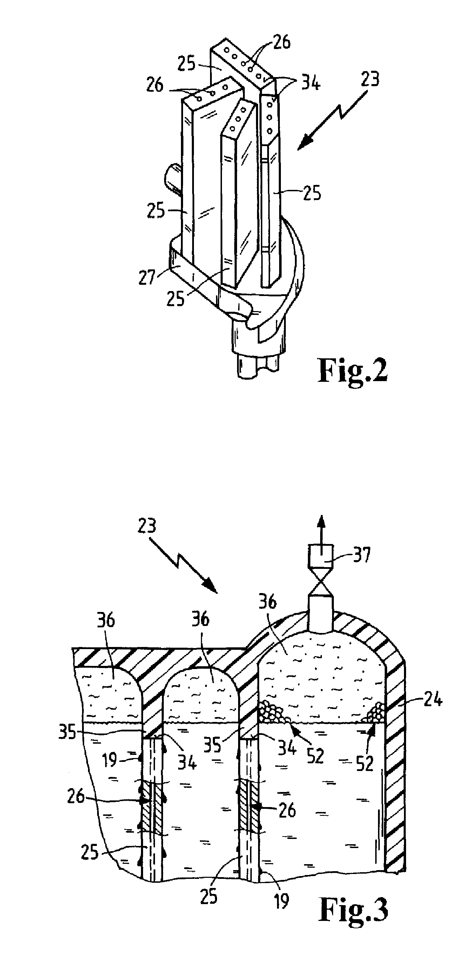

In Figur 2 ist eine Wasseraustragsvorrichtung 23 ohne Gehäuse 24 dargestellt. Der Figur 1 entsprechende Bauteile sind mit gleichen Bezugszeichen versehen. Die Membranen 25 sind als flache Bauteile mit einer senkrecht verlaufenden Kanalstruktur 26 ausgebildet. An ihrem oberen Ende 34 sind die Kanalstrukturen 26 dichtend verschlossen. Die Abdichtung kann auch durch eine im Gehäuse 24 eingebrachte Dichtscheibe erfolgen.

In Figur 3 ist ein Ausschnitt aus einer Wasseraustragsvorrichtung 23 im Schnitt dargestellt. Die Membranen 25 sind mit ihren oberen Enden 34 dichtend mit Stegen 35 verbunden, wobei die Stege 35 an das Gehäuse 24 angeformt sind. Bei anderen Ausgestaltungen können die Stege 35 auch separat ausgeführt und mit dem Gehäuse 24 verbunden werden. Durch die Verbindung der Stege 35 mit den Membranen 25 sind die oberen Enden 34 der Membranen 25 dichtend verschlossen. Weiterhin bilden die Stege 35 gemeinsam mit dem Gehäuse 24 ein Totvolumen 36, in welchem sich die an der Membran 25 abgeschiedenen Kraftstoffreste 52 sammeln können. Das Totvolumen 36 verfügt über ein Ablassventil 37, durch welches die Kraftstoffreste aus dem Totvolumen 36 entweichen können. Diese Kraftstoffreste strömen dann zurück in das Filtergehäuse 10, wo sie dem Kraftstoff beigemengt werden.

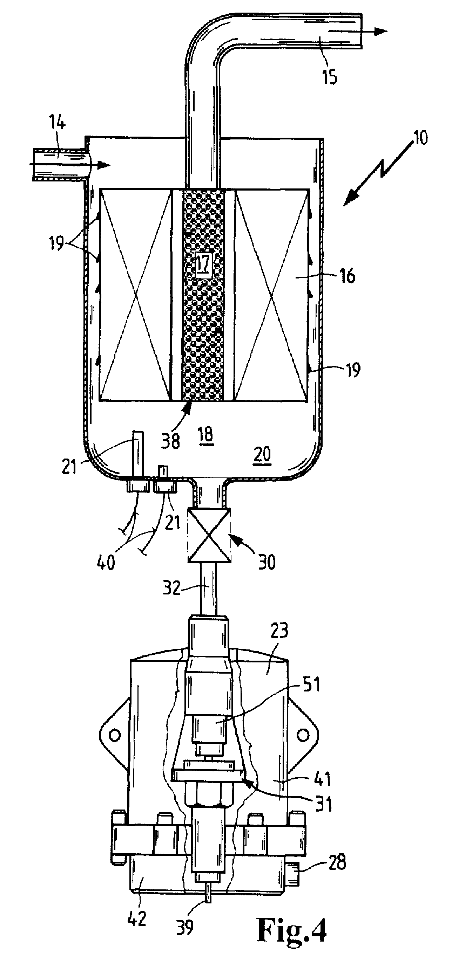

Die Figur 4 zeigt eine weitere Ausgestaltung des Kraftstofffilters. Hierbei ist die Wasseraustragsvorrichtung 23 in einem separaten Gehäuse unterhalb des Filterelementes 16 angeordnet. Die den vorherigen Figuren entsprechenden Bauteile sind mit den gleichen Bezugszeichen versehen. Die Wasseraustragsvorrichtung 23 verfügt über ein Gehäuseoberteil 41 und ein Gehäuseunterteil 42. Sie ist über einen Strömungskanal 32, welcher hier vorzugsweise als Schlauchleitung ausgeführt ist, mit dem Filtergehäuse 10 verbunden. In dem Strömungskanal 32 ist das Ventil 30 angeordnet. Weiterhin weist das Filterelement 16 ein Stützrohr 38 auf, welches ein Kollabieren des Filtermediums bei zu hohen Druckunterschieden verhindert. Die Pumpe 31 ist hier als Wachsdehnelement mit integrierter PTC-Heizung ausgeführt, wobei ein Kolben 51 mit der Pumpe 31 verbunden ist, und der Kolben 51 in einem Volumen des Gehäuseoberteils 41 der Wasseraustragsvorrichtung 23 bewegbar ist. Am unteren Ende der Wachsdehnelementpumpe 31 ist ein Stromanschluss 39 für das PTC-Element angeordnet. Die im Filtergehäuse 10 angeordneten Wassersensoren 21 weisen ebenfalls elektrische Anschlüsse 40 auf. Das im Strömungskanal 32 angeordnete Ventil 30 ist in der Lage das Filtergehäuse 10 von der Wasseraustragsvorrichtung druckdicht zu trennen. Nachdem der Wassersensor 21 den Maximalstand des vom Filtermedium 16 abgeschiedenen Wassers anzeigt, schließt sich das Ventil 30 und die Wachsdehnelementpumpe 31 führt einen Hub aus. Der an der Oberseite der Wachsdehnelementpumpe 31 angebrachte Kolben 51 verdrängt das Wasser innerhalb der Wasseraustragsvorrichtung 23 und Druck wird aufgebaut. Mittels dieses aufgebauten Überdrucks wird das verdrängte Wasservolumen durch die Membran 25 gedrückt und gereinigt. Das durch die Kanäle 26 nach innen abfließende und gereinigte Wasser tritt dann aus dem Austritt 28 vom Gehäuseunterteil 42 in die Umgebung aus. Bei der Rückstellung des Kolbens 51 in seine Ausgangslage kann das Ventil 30 entweder geöffnet werden, wobei dann Flüssigkeit aus dem Filtergehäuse 10 nachströmen kann oder aber geschlossen bleiben, wobei dann bei der Rückstellung des Kolbens 51 Luft aus der Reinseite angesaugt wird. Dieses führt zu einer zumindest teilweisen Ablösung der an der Membranoberfläche entstehenden Deckschicht, welche aus Kohlenwasserstoffen besteht. Dadurch kann die Permeationsleistung an der Membran deutlich erhöht werden. Nachdem der Kolben wieder in seine Ausgangslage zurückgekehrt ist, kann der Vorgang wiederholt werden.

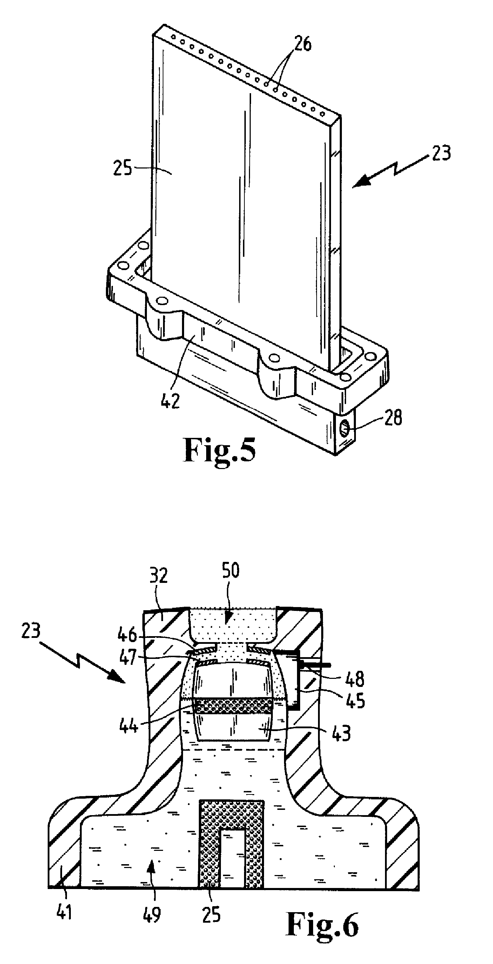

Figur 5 zeigt einen Teil der Wasseraustragsvorrichtung 23 dieser Ausgestaltung mit dem Gehäuseunterteil 42. Den vorherigen Figuren entsprechende Bauteile sind mit den gleichen Bezugszeichen versehen. Hier ist die Membran 25 mit den darin angeordneten Kanälen 26 zu erkennen, welche in dem Gehäuseunterteil 42 angeordnet ist. Zur Reinigung wird das Wasser durch die Membranoberfläche der Membran 25 in die Kanäle 26 durch den Oberdruck gedrückt, wobei die Kanäle 26 einseitig verschlossen sind, so dass die gereinigte Flüssigkeit nach unten in den Auslasskanal 28 austreten kann.

Die Figur 6 zeigt einen erfindungsgemäßen Schwimmerschalter im Schnitt. In dieser Figur ist eine alternative Ausgestaltung zu der Variante mit Wasserstandssensoren 21 und Ventil 30 zu erkennen. Die Anordnung erfolgt bevorzugt im Bereich des Übergangs des Strömungskanals 32 in das obere Gehäuseteil 41 der Wasseraustragsvorrichtung 23. Im Bereich dieses Übergangs ist ein Schwimmer 43 angeordnet, welcher einen Magneten 44 trägt. Dieser schaltet bei Erreichen einer bestimmten Position des Schwimmers 44 einen Read-Kontakt 45, wobei dieser über elektrische Anschlüsse 48 verfügt. Weiterhin weist der Durchgang eine Verengung mit einem Dichtsitz 46 auf, welcher mit Dichtflächen 47 auf dem Schwimmer korrespondieren. Der Schwimmer schwimmt dabei an der Oberfläche des schwereren Wassers 49 an der Grenzfläche zum leichteren Kraftstoff 50. Bei steigendem Wasserstand innerhalb des oberen Gehäuseteils 41 der Wasseraustragsvorrichtung 23 wird der Schwimmer 43 dann gegen die Verengung des Durchgangs gedrückt, wobei Dichtflächen 47 und Dichtsitz 46 eine dichte Verschließung des Durchgangs ergeben. In dieser Position wird weiterhin der Read-Kontakt 45 ausgelöst. Bei Auslösen des Read-Kontakts 45 wird die Pumpe 31 gemäß Figur 4 in Funktion gesetzt, wobei innerhalb der Wasseraustragsvorrichtung 23 ein Überdruck aufgebaut wird, welcher den dichten Verschluss des Durchgangs durch den Schwimmer 43 weiter verstärkt. Dabei wird ein großer Teil des in der Wasseraustragsvorrichtung 23 gespeicherten Wassers 49 durch die Membran 25 gedrückt, dabei gereinigt und daraufhin durch den Auslass 28 ausgetragen.

## Patentansprüche

1. Kraftstofffilter, insbesondere für Kraftfahrzeuge, aufweisend ein Filtergehäuse (10) mit einem Einlass (14) und einem Auslass (15), und einer Wasseraustragsvorrichtung (23), wobei zwischen dem Einlass (14) und dem Auslass (15) ein Filterelement (16) zur Reinigung von Kraftstoff angeordnet ist, wobei in dem Filtergehäuse (10) ein Sammelraum (20) vorgesehen ist, in welchem sich das aus dem Kraftstoff abgeschiedene Wasser sammelt, **dadurch gekennzeichnet, dass** die Wasseraustragsvorrichtung (23) über ein Gehäuse (24) verfügt, welches über einen Eintritt (33) und einen Austritt (28) verfügt, wobei in dem Gehäuse (24) eine für Wassermoleküle durchlässige Membran (25) angeordnet ist, welche den Eintritt (33) von dem Austritt (28) trennt, wobei die Membran (25) über Kanalstrukturen (26) verfügt, welche einerseits dichtend verschlossen sind.

2. Kraftstofffilter nach Anspruch 1, **dadurch gekennzeichnet, dass** die Membran (25) aus einem anorganischen Material, insbesondere Keramik besteht.

3. Kraftstofffilter nach Anspruch 2, **dadurch gekennzeichnet, dass** zwischen dem Eintritt (33) und dem Austritt (28) ist ein Ventil (30) angeordnet ist.

4. Kraftstofffilter nach einem der vorangehenden Ansprüche, **dadurch gekennzeichnet, dass** ein Sensor (21) im Sammelraum (20) angeordnet ist, welcher mit dem Ventil (30) korrespondierend verbunden ist.

5. Kraftstofffilter nach einem der Ansprüche 1 bis 2, **dadurch gekennzeichnet, dass** zwischen Sammelraum (20) und Eintritt (33) ein Schwimmer (XX) angeordnet ist, wobei der Schwimmer (43) auf der Grenze zwischen Wasser und Kraftstoff schwimmt und weiterhin einen Magneten (44) aufweist, welcher mit einem Read-Kontakt (45) korrespondiert.

6. Kraftstofffilter nach Anspruch 5, **dadurch gekennzeichnet, dass** der Schwimmer (43) eine Dichtfläche (47) aufweist, die im Durchgang zwischen Sammelraum (20) und Eintritt (33) bei einem vorgegebenen Wasserstand mit einem Dichtsitz (46) korrespondiert und den Durchgang verschließt.

7. Kraftstofffilter, nach einem der vorangehenden Ansprüche, **dadurch gekennzeichnet, dass** das Gehäuse (24) über ein Totvolumen (36) verfügt, in welchem sich von der Membran (25) abgeschiedene Kraftstoffreste sammeln.

8. Kraftstofffilter nach Anspruch 7, **dadurch gekennzeichnet, dass** das Totvolumen (36) über ein Ablassventil (37) mit dem Sammelraum (20) kommunizierend verbunden ist.

9. Kraftstofffilter nach einem der vorangehenden Ansprüche, **dadurch gekennzeichnet, dass** die Wasseraustragsvorrichtung (23) lösbar mit dem Sammelraum (20) verbunden, insbesondere verschraubt ist.

10. Kraftstofffilter nach einem der vorangehenden Ansprüche, **dadurch gekennzeichnet, dass** der Austritt (28) mit einer Pumpe (31) verbunden ist, wodurch in der Wasseraustragsvorrichtung (23) ein zum Innendruck des Filtergehäuses (10) unterschiedlicher Druck erzeugbar ist.

11. Kraftstofffilter nach Anspruch 10, **dadurch gekennzeichnet, dass** die Pumpe ein Wachsdehnelement ist, durch welches ein Kolben (51) im Inneren der Wasseraustragsvorrichtung (23) bewegbar ist, derart dass durch ein tieferes Eindringen des Kolbens (51) in die Wasseraustragsvorrichtung (23) ein erhöhter Innendruck in der Wasseraustragsvorrichtung (23) erzeugt wird.

12. Kraftstofffilter nach Anspruch 11, **dadurch gekennzeichnet, dass** am Wachsdehnelement eine Heizvorrichtung, insbesondere ein PTC-Element angeordnet ist, derart dass durch ein Aufheizen des Wachsdehnelementes der Kolben (51) ausfährt.

13. Verfahren zum Betreiben eines Kraftstofffilters gemäß einem der vorangehenden Ansprüche, **dadurch gekennzeichnet, dass** das in dem Sammelraum (20) abgeschiedene, verunreinigte Wasser durch den Eintritt (33) in die Wasseraustragsvorrichtung (23) einströmt, durch einen Druckunterschied zwischen dem Eintritt (33) und dem Austritt (28) treten Wassermoleküle durch die Membran (25) hindurch und können als reines Wasser in die Umwelt abgegeben werden.

14. Verfahren nach Anspruch 13, **dadurch gekennzeichnet, dass** der Druckunterschied zwischen dem Eintritt (33) und dem Austritt (28) durch einen Kolben (51) eines Wachsdehnelementes erzeugt wird, wobei ein Ausfahren des Kolbens (51) über eine Aufheizung des Wachsdehnelementes mittels einer Heizvorrichtung erfolgt.

15. Verfahren nach Anspruch 13, **dadurch gekennzeichnet, dass** die Membran (25) nach einer definierten Zeitspanne mit dem verunreinigten Wasser beaufschlagt wird.
